# EUROPÄISCHE PATENTSCHRIFT

(11) **EP 1 547 309 B1**
(45) Veröffentlichungstag und Bekanntmachung des Hinweises auf die Patenterteilung: **21.11.2007**
(21) Anmeldenummer: 03750366.1
(22) Anmeldetag: 22.09.2003
(51) Int. Cl.: H04L 12/24

(54) **VERFAHREN ZUR AKTUALISIERUNG DES LOKALEN MANAGEMENTSYSTEMS IN MINDESTENS EINEM NETZELEMENT EINES TELEKOMMUNIKATIONSNETZWERKES**
METHOD FOR UPDATING THE LOCAL MANAGEMENT SYSTEM IN AT LEAST ONE NETWORK ELEMENT OF A TELECOMMUNICATION NETWORK
PROCEDE DE MISE A JOUR D'UN SYSTEME DE GESTION LOCAL DANS AU MOINS UN ELEMENT RESEAU D'UN RESEAU DE TELECOMMUNICATION

(30) Priorität: 30.09.2002 DE 10245641
(43) Veröffentlichungstag der Anmeldung: 29.06.2005
(73) Patentinhaber: NOKIA SIEMENS NETWORKS GMBH & CO. KG, 81541 München (DE)
(72) Erfinder: POHLE, Claudia, 81829 München (DE); GLUFKE, Jens, 85614 Eglharting (DE); RAVE, Thomas, 80992 München (DE); HERRMANN, Günther, 82110 Germering (DE)
(86) Internationale Anmeldenummer: PCT/DE2003/003140
(87) Internationale Veröffentlichungsnummer: WO 2004/032447

(56) Entgegenhaltungen:
- FERIDUN M ET AL: "IMPLEMENTING OSI AGENT/MANAGERS FOR TMN" IEEE COMMUNICATIONS MAGAZINE, IEEE SERVICE CENTER. PISCATAWAY, N.J, US, Bd. 34, Nr. 9, 1. September 1996 (1996-09-01), Seiten 62-67, XP000627236 ISSN: 0163-6804
- RANC D ET AL: "A staged approach for TMN to TINA migration" GLOBAL CONVERGENCE OF TELECOMMUNICATIONS AND DISTRIBUTED OBJECT COMPUTING, 1997. PROCEEDINGS., TINA 97 SANTIAGO, CHILE 17-20 NOV. 1997, LOS ALAMITOS, CA, USA,IEEE COMPUT. SOC, US, 17. November 1997 (1997-11-17), Seiten 221-228, XP010271668 ISBN: 0-8186-8335-X
- KELLER A: "Tool-based implementation of a Q-Adapter Function for the seamless integration of SNMP-managed devices in TMN" NETWORK OPERATIONS AND MANAGEMENT SYMPOSIUM, 1998. NOMS 98., IEEE NEW ORLEANS, LA, USA 15-20 FEB. 1998, NEW YORK, NY, USA,IEEE, US, 15. Februar 1998 (1998-02-15), Seiten 400-411, XP010267414 ISBN: 0-7803-4351-4
- GSCHWIND T ET AL: "ADK-building mobile agents for network and systems management from reusable components" AGENT SYSTEMS AND APPLICATIONS, 1999 AND THIRD INTERNATIONAL SYMPOSIUM ON MOBILE AGENTS. PROCEEDINGS. FIRST INTERNATIONAL SYMPOSIUM ON PALM SPRINGS, CA, USA 3-6 OCT. 1999, LOS ALAMITOS, CA, USA,IEEE COMPUT. SOC, US, 3. Oktober 1999 (1999-10-03), Seiten 13-21, XP010358572 ISBN: 0-7695-0342-X

## Beschreibung

Die Erfindung betrifft ein Verfahren zur Aktualisierung des lokalen Managementsystems in mindestens einem Netzelement eines Telekommunikationsnetzwerkes, wobei das lokale Managementsystem mindestens aus einem in einer Netzelement-Managementeinheit des Netzelementes gespeicherten Netzelement-Agenten und einem Netzelement-Manager besteht.

In Telekommunikationsnetzen werden eine Vielzahl von Datenverbindungen über mehrere, untereinander verbundene Netzelemente (NE) aufgebaut, aufrecht erhalten und wieder abgebaut. Hierbei kommt den Netzelementen die Aufgabe der Vermittlung bzw. Einrichtung und Administration von Datenverbindungen zu. In derartigen Telekommunikationsnetzwerken kann die Steuerung der jeweiligen Netzelemente über einzelne in den Netzelementen integrierten lokalen Managentsysteme durchgeführt werden. Ein derartiges lokales Managementsystem ist üblicherweise aus zwei zusammenwirkenden Managementsystem-Modulen aufgebaut, den Netzelement-Agenten sowie den Netzelement-Managern.

Der Netzelement-Agent ist in dem zu managenden Netzelement in einer Netzelement-Managementeinheit integriert und verwaltet einzelne Management-Objekte. Derartige Management-Objekte können Informationen beispielsweise über den Aufbau bzw. die Architektur des Netzelementes oder über den Schaltzustand des jeweiligen Netzelementes bzw. des Telekommunikationsnetzwerkes beinhalten. Über den Netzelement-Agenten werden zusätzlich diese Management-Objekte überwacht und gesteuert - siehe hierzu beispielsweise die Patentschrift US 5,651,006, Spalten 1 bis 3.

Durch den Netzelement-Manager werden insbesondere die einem Netzelement-Agenten zugeordneten Netzelementressourcen verwaltet und gesteuert. Hierzu ist der Netzelement-Manager über eine Datenverbindung mit dem Netzelement-Agenten verbunden, wobei der Austausch der Managementdaten über unterschiedliche Netzmanagementprotokolle erfolgt.

Hierfür sind unter anderen zwei internationale Netzmanagementstandards für Telekommunikationsnetzwerke, der Bellcore (jetzt Telcordia) Managementstandard und der OSI (Open System Interconnection) Managementstandard bekannt. Aus diesen Managementstandards gehen Netzmanagementprotokolle und Managementschnittstellenspezifikationen wie beispielsweise TL1 (Transactions Language 1) oder Q3 hervor.

Derartige Managementschnittstellenspezifikationen sind ständigen Änderungen unterworfen, die Aktualisierungen in den bereits bestehenden lokalen Managementsystem-Modulen, d.h. sowohl in den Netzelement-Agenten als auch in den Netzelement-Managern, nach sich ziehen. Nach der Aktualisierung dieser lokalen Managementsystem-Module in den jeweiligen Netzelementen können bei der Inbetriebnahme des lokalen Managementsystems Inkompabilitäten zwischen dem Netzelement-Agenten und dem Netzelement-Manager auftreten. Mögliche Konfliktfälle können darin begründet sein, daß einerseits der Netzelement-Agent vereinzelte Steuerkommandos des Netzelement-Managers nicht erkennt und folglich nicht ausführt oder durch den aktualisierten Netzelement-Agenten die realen Betriebszustände des Netzelementes nicht korrekt erfaßt und wiedergegeben werden.

Bisher werden Aktualisierungen der beiden lokalen Managementsystem-Module unabhängig voneinander aus der im ASCII-Code vorliegenden Managementschnittstellenspezifikation händisch durchgeführt, d.h. durch einen Netzmanagementspezialisten wird der maschinenlesbare Code der lokalen Managementsystem-Module an die Änderungen getrennt angepaßt. Nach erfolgter getrennter Aktualisierung der beiden lokalen Managementsystem-Module werden mit Hilfe von Systemtests die Wechselwirkungen zwischen den beiden lokalen Managementsystem-Modulen überprüft. Hierbei wird versucht den Nachweis zu erbringen, daß der Netzelement-Manager genau den Befehlsvorrat abdeckt, der erforderlich ist, um das Netzelement korrekt zu steuern. Nach Abschluß der Systemtests werden zumindest der Netzelement-Agent oder beide lokale Managementsystem-Module in das jeweilige Netzelement mittels üblichen Software-Download-Befehlen über eine Datenverbindung geladen.

Aus der Druckschrift "Implementing OSI Agent/Managers for TMN" (M. Feridun et al.) ist ein Verfahren bekannt zur automatischen Erzeugung von Netzwerk - Agenten (z. T. mit management-funktion).

Ferner ist aus der Patentschrift US 6,263,366 ein System und ein Verfahren zur Übersetzung von TL1-Nachrichten mit Hilfe eines "Mapper/Parser"-Moduls in durch das Netzmanagementsystem verarbeitbare Nachrichten bzw. Steuerkommandos bekannt. Mit Hilfe dieses "Mapper/Parser"-Moduls werden die TL1-Nachrichten in äquivalente Alarmmeldungen oder äquivalente Ereignismeldungen, die durch das Netzmanagementsystem weiterverarbeitet werden können, automatisch umgesetzt.

Die Aufgabe der vorliegenden Erfindung liegt insbesondere darin, ein neuartiges Verfahren zur Aktualisierung eines lokalen Managementsystems in einem Netzelement anzugeben, durch das Inkompatibilitäten zwischen dem aktualisierten Netzelement-Agenten und dem aktualisierten Netzelement-Manager vermieden werden können.

Die Aufgabe wird durch die Merkmale des Patentanspruches 1 gelöst.

Der wesentliche Vorteil des erfindungsgemäßen Verfahrens ist darin zu sehen, daß ein aktualisierter Netzelement-Agent sowie ein aktualisierter Netzelement-Manager durch einen gemeinsamen Generierungsmechanismus unmittelbar aus einer vorgegebenen Managementschnittstellenspezifikation erzeugt werden und zumindest der aktualisierte Netzelement-Agent in die Netzelement-Managementeinheit des zu aktualisierenden Netzelements geladen wird. Durch die erfindungsgemäße automatisierte und gemeinsame Generierung des Netzelement-Agenten sowie des Netzelement-Managers direkt aus der vorliegenden Managementschnittstellenspezifikation ist eine Kompatibilität der beiden lokalen Managementsystem-Module gewährleistet, wodurch die Fehleranfälligkeit des lokalen, zu aktualisierenden Managementsystems stark reduziert wird. Hierdurch wird der für die Inbetriebnahme des lokalen Managementsystems nach der Aktualisierung erforderliche Zeitaufwand zusätzlich deutlich reduziert.

Besonders vorteilhaft wird dadurch realisiert, daß der aktualisierte Netzelement-Manager in einer zentralen Einheit des Telekommunikationsnetzwerks gespeichert oder ebenfalls in die Netzelement-Managementeinheit des zu aktualisierenden Netzelements geladen.

Vorteilhaft wird zusätzlich der aktualisierte Netzelement-Agent und der aktualisierte Netzelement-Manager über eine Datenverbindung unter Verwendung eines Datenübertragungsprotokolls von einem Benutzerrechner in die Netzelement-Managementeinheit des zu aktualisierenden Netzelements geladen. Hierdurch kann das Laden der aktualisierten lokalen Managementsystem-Module in das zu aktualisierende Netzelement automatisiert und räumlich unabhängig erfolgen.

Ein weiterer Vorteil der Erfindung ist darin zu sehen, daß zusätzlich eine HTML-Managementschnittstellenspezifikation durch den gemeinsamen Generierungsmechanismus im Hyper-Text-Markup-Language-(HTML)-Format erzeugt wird, die zusammen mit dem aktualisierten Netzelement-Manager gespeichert wird. Eine derartige im HTML-Format vorliegende HTML-Managementschnittstellenspezifikation ist über einen Web-Browser einfach und aktualisiert abrufbar. Hierdurch werden nur die Funktionalitäten des lokalen Managementsystems angezeigt, die für das betrachtete Netzelement aktuell zur Verfügung stehen.

Vorteilhafte Weiterbildungen und Ausbildungen des erfindungsgemäßen Verfahrens sind in den weiteren Patentansprüchen beschrieben.

Im folgenden wird das erfindungsgemäße Verfahren anhand eines Ausführungsbeispiels näher erläutert. Hierzu wird ein Ausführungsbeispiel des Verfahrens zur Aktualisierung eines lokalen Managementsystems MS in mindestens einem Netzelement NE eines Telekommunikationsnetzwerkes TKN anhand eines schematischen Blockschaltbildes erläutert. Beispielhaft zeigt das Blockschaltbild eine zentrale Einheit CU, beispielsweise eine zentrale Servereinheit, eines Telekommunikationsnetzwerkes TKN sowie eines einer Vielzahl im Telekommunikationsnetzwerk TKN vorhandener Netzelemente NE. Das Netzelement NE weist eine Netzelement-Managementeinheit MSU auf, in der beispielsweise ein Netzelement-Agent NE-A sowie ein Netzelement-Manager NE-M gespeichert sind. Die Speicherung der beiden lokalen Managementsystem-Module NE-A, NE-M kann wahlweise auch in getrennten Einheiten im Netzelement NE erfolgen. Das Netzelement NE ist mit der zentralen Einheit CU des Telekommunikationsnetzwerkes TKN über eine Datenverbindung verbindbar.

Die zentrale Einheit CU weist mindestens eine Speichereinheit SU auf, in der die aktuelle Managementschnittstellenspezifikation IS bevorzugt im ASCII-Code hinterlegt ist. Hierbei können auch unterschiedliche Versionen oder nur Teile der Managementschnittstellenspezifikation IS hinterlegt werden. Ferner ist in der zentralen Einheit CU ein Generierungsmechanismus-Modul GMM vorgesehen, in dem der gemeinsame Generierungsmechanismus GM zur Erzeugung des aktualisierten Netzelement-Agenten NE-A als auch des aktualisierten Netzelement-Manager NE-M unmittelbar aus der gespeicherten Managementschnittstellenspezifikation IS realisiert ist. Der gemeinsame Generierungsmechanismus GM ist hierbei zumindest teilweise durch einen Parser realisiert.

Darüber hinaus ist in der zentralen Einheit CU beispielhaft eine zentrale Netzmanagementsystemeinheit vorgesehen, mit deren Hilfe das gesamte Netzmanagement innerhalb des Telekommunikationsnetzwerkes TKN zentral durchgeführt wird.

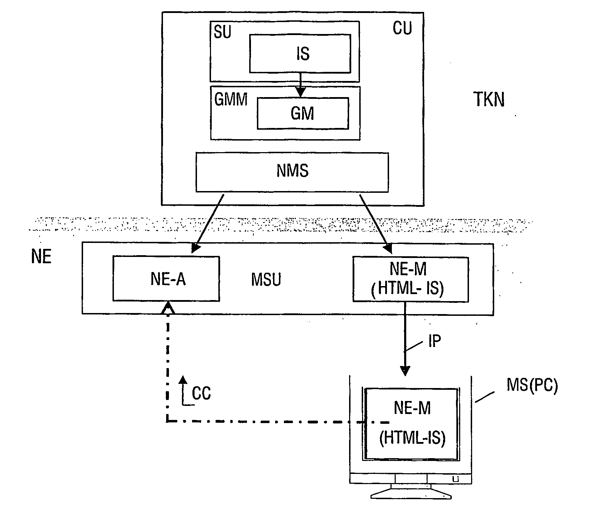

Zur Aktualisierung des lokalen Managementsystems MS des einen Netzelements NE wird die aktualisierte, im ASCII-Datenformat vorliegende Managementschnittstellenspezifikation IS, beispielsweise eine Tl-1-Schnittstellenspezifikation, in die Speichereinheit SU der zentralen Einheit CU geladen. In dem über eine Datenverbindung mit der Speichereinheit SU verbundenen gemeinsamen Generierungsmechanismus-Modul GMM wird aus der im ASCII-Code vorliegenden Managementschnittstellenspezifikation IS unmittelbar der Netzelement-Agent NE-A sowie der Netzelement-Manager NE-M als maschinenlesbarer Code erzeugt. Diese Erzeugung kann alternativ in einer separaten Einheit - nicht in der Figur dargestellt - getrennt von der zentralen Einheit CU des Telekommunikationsnetzwerk TKN durchgeführt werden. Der aktualisierte Netzelement-Agent NE-A sowie der aktualisierte Netzelement-Manager NE-M werden sodann direkt über eine Datenverbindung oder über eine Datenschnittstelle des zentralen Netzmanagementsystems NMS in die Netzelement-Managementeinheit MSU des zu aktualisierenden Netzelementes NE geladen, wobei der Netzelement-Manager NE-M alternativ in einer zentralen Speichereinheit SU des Telekommunikationsnetzwerkes TKN oder in einer Speichereinheit eines tragbaren Benutzerrechner PC "downloadbar" gespeichert werden kann.

Alternativ wird der aktualisierte Netzelement-Agent NE-A über eine Datenverbindung unter Verwendung eines Datenübertragungsprotokolls, beispielsweise dem File Transfer Protokoll (FTP), von einem tragbaren Benutzerrechner PC in das zu aktualisierende Netzelement NE bzw. dessen Netzelement-Managementeinheit MSU geladen.

Zum Laden des Netzelement-Managers NE-M aus dem aktualisierten Netzelement NE oder einer zentralen Speichereinheit wird der aktualisierte Netzelement-Manager NE-M beispielsweise als JAVA-Applet realisiert. Hierdurch kann das "Downloaden" des Netzelement-Managers NE-M über das Internet-Datenübertragungsprotokoll IP durchgeführt werden. Ein derartiger "Download" ist über jeden Standard-Benutzerrechner PC, der einen Web-Browser aufweist, möglich, so daß das Managen des aktualisierten Netzelementes NE mit Hilfe des auf den Benutzerrechner PC geladenen Netzelement-Managers NE-M räumlich getrennt von dem zu managenden Netzelement NE durchführbar ist. Hierbei wird das JAVA-Applet auf dem Web-Browser des Benutzerrechner's PC ausgeführt. Über den im Web-Browser ausgeführten Netzelement-Manager NE-M wird sodann eine Datenverbindung zum aktualisierten Netzelement-Agenten NE-A aufgebaut und über das implementierte Netzmanagementprotokoll, beispielsweise das TL-1-Schnittstellenprotokoll, werden Steuerkommandos cc, die durch den Netzelement-Manager NE-M erzeugt werden, direkt an den in der Netzelement-Managementeinheit MSU ausgeführten Netzelement-Agenten NE-A übertragen. Im Netzelement NE führt der Netzelement-Agent NE-A die empfangenen Steuerkommandos cc, beispielsweise TL-1-Steuerkommandos cc, aus, wodurch den Steuerkommandos cc zugeordnete Aktionen im Netzelement NE ausgelöst werden.

Zusätzlich wird im Generierungsmechanismus-Modul GMM unmittelbar aus der im ASCII-Code vorliegenden Managementschnittstellenspezifikation IS über den gemeinsamen Generierungsmechanismus GM eine HTML-Managementschnittstellenspezifikation HTML-IS im Hyper-Text-Markup-Language-Format (HTML) erzeugt. Diese HTML-Managementschnittstellenspezifikation HTML-IS wird zusammen mit dem aktualisierten Netzelement-Manager NE-M entweder unmittelbar im zu aktualisierenden Netzelement NE oder in einer zentralen Speichereinheit des Telekommunikationsnetzwerkes TKN "downloadbar" gespeichert. Über eine derartige HTML-Managementschnittstellenspezifikation HTML-IS, die mit Hilfe eines herkömmlichen Web-Browsers angezeigt werden kann, kann ein Benutzer unmittelbar über seinen Benutzerrechner PC die für das jeweilige Netzelement NE verfügbaren Steuerkommandos cc bzw. Steueroptionen abfragen und erhält hierdurch Informationen über die einzelnen Parameteroptionen des jeweiligen zur Verfügung stehenden Steuerkommandos cc. In einer bevorzugten Ausführungsform der Erfindung werden die HTML-Managementschnittstellenspezifikation HTML-IS und der Netzelement-Manager NE-M in einer gemeinsamen Speichereinheit abgespeichert.

Durch das beschriebene Verfahren wird die Kompatibilität zwischen dem Netzelement-Agenten NE-A und dem Netzelement-Manager NE-M bereits in einer frühen Phase des Aktualisierungsprozesses sichergestellt, so daß nahezu keine Konflikte bei der Inbetriebnahme des lokalen Managementsystems MS nach der Aktualisierung innerhalb des aktualisierten Netzelementes NE auftreten. Eine derartig genaue Übereinstimmung bzw. Kompatibilität der erzeugten Netzelement-Managers NE-M mit dem Netzelement-Agenten NE-A ist durch die gemeinsame Erzeugung mit Hilfe des gemeinsamen Generierungsmechanismus GM unmittelbar aus der aktuellen Managementschnittstellenspezifikation IS gewährleistet.

In dem dargestellten Ausführungsbeispiel ist beispielhaft nur die Aktualisierung eines einzelnen Netzelementes NE beschrieben, das erfindungsgemäße Verfahren kann alternativ zur Aktualisierung einer Vielzahl von in einem Telekommunikationsnetzwerk TKN vorhandenen Netzelementen NE angewandt werden.

Darüber hinaus ist die Erzeugung des Netzelement-Agenten NE-A und des Netzelement-Managers NE-M über ein im jeweiligen Netzelement NE vorgesehenen gemeinsamen Generierungsmechanismus GM unmittelbar im zu aktualisierenden Netzelement NE möglich, wobei die aktuelle Managementschnittstellenspezifikation IS entweder von einer zentralen Speichereinheit SU innerhalb des Telekommunikationsnetzwerkes TKN geladen werden kann oder unmittelbar im zu aktualisierenden Netzelement NE gespeichert werden kann.

## Patentansprüche

1. Verfahren zur Herstellung und Aktualisierung eines lokalen Managementsystems eines Netzelements (NE) eines Telekommunikationsnetzwerkes, das Managementsystem umfassend
- einen Netzelement-Agenten (NE-A), der in einer Netzelement-Managementeinheit (MSU) des Netzelementes gespeichert ist und dazu dient, dass von dem Netzelement gemäß einer vorgegebenen Managementschnittstellenspezifikation (IS) ausgebildete Nachrichten (CC) unterstützt werden;
- einen zugehörigen Netzelement-Manager (NE-M), der zur Steuerung des Netzelementes (NE) dient und dazu die Nachrichten (CC) mit dem Netzelement (NE) austauscht;
mit folgenden Schritten:
(a) Herstellung von Agent (NE-A) und Manager (NE-M) durch einen gemeinsamen Generierungsmechanismus (GM) unmittelbar aus der Managementschnittstellenspezifikation (IS);
(b) Aktualisierung des Managementsystems durch Speicherung der hergestellten Systemkomponenten, wobei der Agent (NE-A) in die Managementeinheit (MSU) des Netzelements (NE) geladen wird.

2. Verfahren nach Anspruch 1,
**dadurch gekennzeichnet,**
**dass** der aktualisierte Netzelement-Manager (NE-M) in einer zentralen Einheit (CU) des Telekommunikationsnetzwerks (TKN) gespeichert wird oder ebenfalls in die Netzelement-Managementeinheit (MSU) des zu aktualisierenden Netzelements (NE) geladen wird.

3. Verfahren nach Anspruch 2,
**dadurch gekennzeichnet,**
**dass** der aktualisierte Netzelement-Agent (NE-A) und der aktualisierte Netzelement-Manager (NE-M) über eine Datenverbindung unter Verwendung eines Datenübertragungsprotokolls von einem Benutzerrechner (PC) in die Netzelement-Managementeinheit (MSU) des zu aktualisierenden Netzelementes (NE) geladen wird.

4. Verfahren nach Anspruch 3,
**dadurch gekennzeichnet,**
**dass** der aktualisierte Netzelement-Manager (NE-M) als JAVA-Applet gespeichert wird und das Laden des aktualisierten Netzelement-Managers (NE-M) über das Internet-Datenübertragungsprotokoll (IP) durchgeführt wird.

5. Verfahren nach einem der Ansprüche 1 bis 4,
**dadurch gekennzeichnet,**
**dass** zusätzlich eine HTML-Managementschnittstellenspezifikation (HTML-IS) durch den gemeinsamen Generierungsmechanismus (GM) im Hyper-Text-Markup-Language-(HTML)-Format erzeugt wird, die zusammen mit dem aktualisierten Netzelement-Manager (NE-M) gespeichert wird.

6. Verfahren nach einem der Ansprüche 1 bis 5,
**dadurch gekennzeichnet,**
**dass** der aktualisierte Netzelement-Manager (NE-M) in einem Web-Browser ausgeführt wird.

7. Verfahren nach einem der Ansprüche 1 bis 6,
**dadurch gekennzeichnet,**
**dass** über den aktualisierten Netzelement-Manager (NE-M) Steuerkommandos (cc) erzeugt werden, die an den aktualisierten Netzelement-Agenten (NE-A) übertragen werden und durch diesen ausgeführt werden.

8. Produkt, umfassend Mittel, die zur vollständigen Durchführung eines Verfahrens nach einem der vorstehenden Verfahrensansprüche eingerichtet sind.

9. Produkt nach dem vorstehenden Produktanspruch, ausgebildet als Computerprogrammprodukt, das in einen Computer geladen und von diesem ausgeführt, diesen dazu veranlasst, das Verfahren nach einem der vorstehenden Verfahrensansprüche durchzuführen.

## Claims

1. Method for producing and updating a local management system of a network element (NE) of a telecommunication network, the management system comprising
- a network element agent (NE-A) which is stored in a network element management unit (MSU) of the network element and is used so that messages (CC) constructed according to a predefined management interface specification (IS) are supported by the network element,
- an associated network element manager (NE-M) which is used for controlling the network element (NE) and exchanges the messages (CC) with the network element (NE) for this purpose, comprising the following steps:
(a) production of agent (NE-A) and manager (NE-M) by a common generation mechanism (GM) directly from the management interface specification (IS),
(b) updating the management system by storing the produced system components, wherein the agent (NE-A) is loaded into the management unit (MSU) of the network element (NE).

2. Method according to claim 1, **characterised in that** the updated network element manager (NE-M) is stored in a central unit (CU) of the telecommunication network (TKN) or is also loaded into the network element management unit (MSU) of the network element (NE) for updating.

3. Method according to claim 2, **characterised in that** the updated network element agent (NE-A) and the updated network element manager (NE-M) is loaded into the network element management unit (MSU) of the network element (NE) for updating via a data connection by using a data transmission protocol of a user computer (PC).

4. Method according to claim 3, **characterised in that** the updated network element manager (NE-M) is stored as a JAVA applet and loading the updated network element manager (NE-M) is carried out via the Internet data transmission Protocol (IP).

5. Method according to any one of claims 1 to 4, **characterised in that** an HTML management interface specification (HTML-IS) is also generated in hypertext markup language (HTML) format by the common generation mechanism (GM) and is stored together with the updated network element manager (NE-M).

6. Method according to any one of claims 1 to 5, **characterised in that** the updated network element manager (NE-M) is executed in a web browser.

7. Method according to any one of claims 1 to 6, **characterised in that** control commands (cc) are generated via the updated network element manager (NE-M) and are transmitted to the updated network element agent (NE-A) and executed thereby.

8. Product, comprising means which are configured for completely carrying out a method according to any one of the preceding method claims.

9. Product according to the preceding product claim, constructed as a computer program product which is loaded into a computer and is executed thereby and causes it to carry out the method according to any one of the preceding method claims.

## Revendications

1. Procédé pour la production et la mise à jour d'un système de gestion local d'un élément de réseau (NE) d'un réseau de télécommunications, le système de gestion comprenant :
- un agent d'élément de réseau (NE-A) qui est enregistré dans une unité de gestion d'élément de réseau (MSU) de l'élément de réseau et sert à faire en sorte que des messages (CC) produits selon une spécification d'interface de gestion (IS) prédéfinie soient supportés par l'élément de réseau ;
- un gestionnaire d'élément de réseau associé (NE-M) qui sert à commander l'élément de réseau (NE) et échange pour cela les messages (CC) avec l'élément de réseau (NE) ;
comprenant les étapes suivantes :
(a) production de l'agent (NE-A) et du gestionnaire (NE-M) directement à partir de la spécification d'interface de gestion (IS) grâce à un mécanisme de génération commune (GM) ;
(b) mise à jour du système de gestion par l'enregistrement des composantes de système produites, l'agent (NE-A) étant chargé dans l'unité de gestion (MSU) de l'élément de réseau (NE).

2. Procédé selon la revendication 1, **caractérisé en ce que** le gestionnaire d'élément de réseau mis à jour (NE-M) est enregistré dans une unité centrale (CU) du réseau de télécommunications (TKN) ou est également chargé dans l'unité de gestion d'élément de réseau (MSU) de l'élément de réseau (NE) devant être mis à jour.

3. Procédé selon la revendication 2, **caractérisé en ce que** l'agent d'élément de réseau mis à jour (NE-A) et le gestionnaire d'élément de réseau mis à jour (NE-M) sont chargés d'un ordinateur d'utilisateur (PC) dans l'unité de gestion d'élément de réseau (MSU) de l'élément de réseau (NE) devant être mis à jour par le biais d'une liaison de données en utilisant un protocole de transmission de données.

4. Procédé selon la revendication 3, **caractérisé en ce que** le gestionnaire d'élément de réseau mis à jour (NE-M) est enregistré en tant qu'appliquette Java et le chargement du gestionnaire d'élément de réseau mis à jour (NE-M) est exécuté par le biais du protocole Internet de transmission de données (IP).

5. Procédé selon l'une des revendications 1 à 4, **caractérisé en ce que** le mécanisme de génération commune (GM) produit, en plus, une spécification d'interface de gestion HTML (HTML-IS) dans le format HTML (*Hyper-Text-Markup-Language*) qui est enregistrée avec le gestionnaire d'élément de réseau mis à jour (NE-M).

6. Procédé selon l'une des revendications 1 à 5, **caractérisé en ce que** le gestionnaire d'élément de réseau mis à jour (NE-M) est exécuté dans un navigateur Web.

7. Procédé selon l'une des revendications 1 à 6, **caractérisé en ce que** des commandes (cc) qui sont transmises à l'agent d'élément de réseau mis à jour (NE-A) et exécutées par celui-ci sont produites par le biais du gestionnaire d'élément de réseau mis à jour (NE-M).

8. Produit comprenant des moyens adaptés pour l'exécution complète d'un procédé selon l'une des revendications de procédé précédentes.

9. Produit selon la revendication de produit précédente, exécuté en tant que programme d'ordinateur qui est chargé dans un ordinateur et exécuté par celui-ci, et entraîne l'exécution par l'ordinateur du procédé selon l'une des revendications de procédé précédentes.
